# EUROPEAN PATENT APPLICATION

(11) **EP 4 838 108 A1**
(43) Date of publication of application: **11.11.2026**
(21) Application number: 26174434.6
(22) Date of filing: 24.04.2026
(51) Int. Cl.: F16D 65/12

(54) **METHOD OF MANUFACTURING A RAILWAY BRAKE DISC ASSEMBLY**

(30) Priority: 05.05.2025 IT 202500009936
(71) Applicant: Boffelli, Roberto, 26010 Camisano (CR) (IT)
(72) Inventor: Boffelli, Roberto, 26010 Camisano (CR) (IT)
(74) Representative: Mittler, Andrea

(57) **Abstract**

A method of manufacturing a brake disc assembly for railway vehicles is described, comprising hot moulding a rough sector (2), together with a bracket (3), thus forming at the exit from the mould a rough assembly (1) consisting of the bracket (3) and the rough sector (2). The method includes machining operations on the machine tool (8) for the removal of stock that take place with single positioning from the rough assembly (1) using the bracket (3) for fixing to a base (7) of the machine tool (8), wherein the machining operations are coaxial with the rough sector (2) according to a lateral symmetry axis (5) of the internal part of the rough sector (2). (Figure 1).

## Description

The present invention relates to a method of manufacturing a railway brake disc assembly.

In the field of railway vehicles, the use of a brake disc assembly comprising a hub and a friction ring consisting of sectors fixed to the hub is known.

Each sector has at least one hole for the connection with the hub by means of a pin-shaped connecting element force-fitted with interference into the hub hole and with clearance into the sector hole coaxial to the hub hole. The connecting element allows each sector to be constrained to the hub.

Examples of this type of connection are described in US-4132294 and US-10619689, the latter having as inventor the present applicant and inventor.

Typically, the sectors of the friction ring are obtained by a moulding process with molten metal casting, more simply a casting process, followed by the removal of the risers, leaving the rough sector with the appropriate stock, and a series of machining steps in which the stock is suitably removed.

The process of removing the stock to obtain the brake disc assembly ready for use is very complex due to the shape of the friction ring sector, typically a portion of circular crown, and comprises the following steps:
- first positioning of the rough sector on a machine tool, not centered on the symmetry axis thereof, for machining first lateral faces of the rough sector, used as reference planes for the subsequent machining operations;
- second positioning of the rough sector on the machine tool, flipped with respect to the first positioning, for machining second lateral faces of the rough sector;
- lateral balancing of the machined sector after said first and second positioning;
- machining of the slot for the hub: a plurality of sectors, forming the friction ring, are placed on a lathe faceplate and the slot for the hub is machined;
- weighing: the balanced sectors are weighed and grouped, preferably stacked in groups of five, so as to appropriately combine the weights of the sectors for balancing the brake disc assembly;
- finishing: the sectors, now associated with the hub to form the brake disc assembly, are machined together by removing about 0.5 mm of metal to make the friction faces planar;
- final balancing: verification of the imbalance of the brake disc assembly so that it is within the tolerances.

Disadvantageously, the continuous need to move the sectors and fix them in new positions generates loss of time and especially machining errors.

US-5503214 and US-7497151 describe methods for machining a brake disc assembly consisting of a friction ring in one piece, i.e., not in sectors. The positioning is simpler, there being no sectors to be joined to form the friction ring.

US-6742233 describes a method of manufacturing a brake disc assembly for railway vehicles, wherein the brake disc assembly comprises a hub and a friction ring connected to the hub by connecting means, wherein the friction ring is composed of at least two sectors comprising respective friction faces.

It is the object of the present invention to provide a method of manufacturing a brake disc assembly with a friction ring in sectors, balanced with precision, wherein the rough sector is obtained by hot moulding, i.e., by casting or forging.

It is a further object of the present invention that the manufacturing method includes fewer steps than the prior art.

It is a yet further object of the present invention that the manufacturing method is cost-effective and simple to manage by an operator.

According to the invention, said and further objects are achieved by a method of manufacturing a brake disc assembly for railway vehicles, as defined in claim 1.

The rough sector includes portions of material, which will then be removed, aligned with the symmetry axis of the internal ventilation surface, for the purpose of using them as a reference for the operations of machining the sector.

Advantageously, once the sector is clamped using said portions of material, it may be machined so that the surfaces that will remain rough, such as the internal ventilation surface of the sector, are well aligned with the symmetry axis and therefore well centered with respect to the center of mass of the machined sector.

Thereby, the machined sectors will all be balanced with respect to the lateral symmetry plane and will all have a weight included in a very narrow range.

Advantageously, the steps of balancing and weighing the individual sectors may be eliminated.

Furthermore, if the brake disc, already assembled, is unbalanced beyond the allowed tolerance, it will be possible to remove the necessary material from the portion of the outer diameter of the appropriate sector, in axis with the lateral symmetry plane, without compromising the functionality and final balancing of the product.

According to the invention, said and further objects are alternatively achieved by a method of manufacturing a brake disc assembly for railway vehicles, as defined in claim 4.

Advantageously, it is possible to carry out the same centering with respect to the symmetry axis of the internal ventilation surface, without needing to make a bracket in one piece with the rough sector during the step of hot moulding.

These and other features of the present invention will be more apparent from the following detailed description of a practical embodiment thereof, shown by way of non-limiting example in the accompanying drawings, in which:

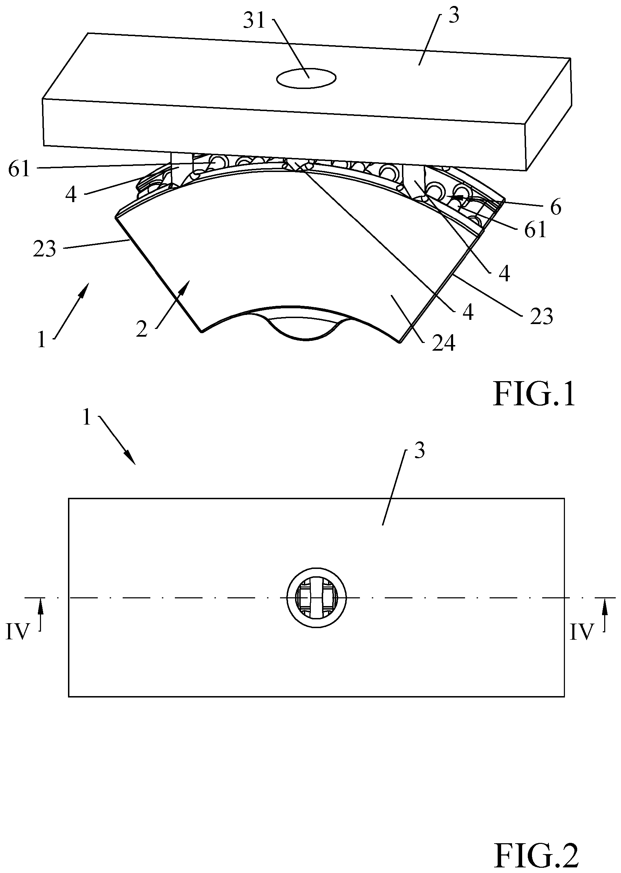

figure 1 shows a perspective view of a rough assembly obtained from a molten metal casting mould, consisting of a rough sector of a friction ring of a brake disc and a bracket;
figure 2 shows a top plan view of the rough assembly;

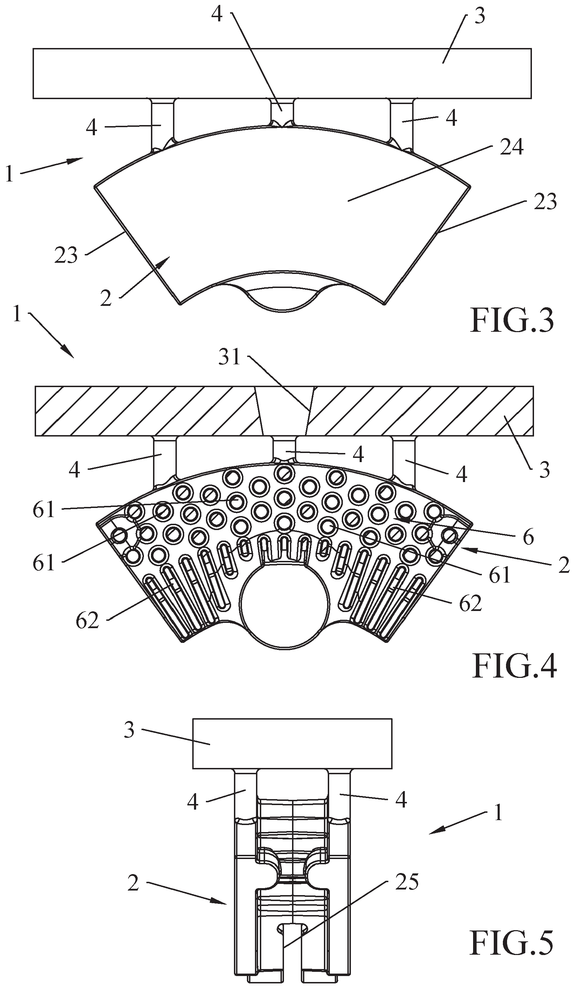

figure 3 shows a front view of the rough assembly;
figure 4 shows a section view taken along line IV-IV in figure 2;
figure 5 shows a side view of the rough assembly;
figure 6 shows a section view, similar to that in figure 4, in which the rough assembly is coupled to a base of a machine tool;
figure 7 shows a section view, similar to that in figure 4, in which a rough sector is coupled to a machine tool according to the prior art;
figure 8 shows a front view of a sector after machining on the machine tool;
figure 9 shows a section view, similar to that in figure 4, in which the rough sector is coupled to a base of a machine tool.

A rough assembly 1 obtained from a molten metal casting mould consists of a rough (or forged) sector 2, suitable for forming a friction ring of a railway brake disc assembly, and a bracket 3 connected to the rough sector 2 by means of connecting elements 4, e.g., in the shape of a pin.

A method for obtaining the brake disc assembly with a friction ring in sectors, in addition to the moulding with molten metal casting of the rough assembly 1 and the removal of the risers, leaving the appropriate stock on the rough sector 2, includes a series of operations comprising the following steps:
- positioning the rough assembly 1 using the bracket 3 for fixing to a base 7 of a machine tool 8, which can perform all the necessary machining operations by removing the stock; the machining operations are coaxial with the rough sector 2;
- removing the bracket 3 and the connecting elements 4;
- grouping the machined sectors on the hub to form the brake disc assembly; the grouping is preferably in groups of five sectors;
- finishing: the sectors are machined together on the hub, removing about 0.5 mm of metal to make the friction faces planar;
- final balancing: verification of the imbalance of the brake disc assembly so that it is within the tolerances.

The rough assembly 1 is made so that the rough sector 2 can be installed on the base 7 of the machine tool 8 for the first machining operation, with the lateral symmetry axis 5 of the internal part of the rough sector 2 being well positioned, specifically the one that will not be machined and includes heat dissipation means 6 for ventilation, including elements in the shape of columns 61 and fins 62.

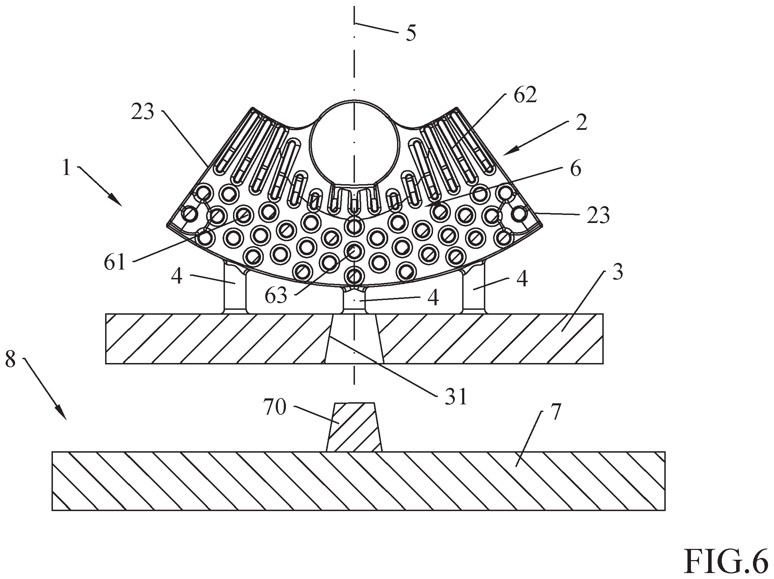

In figure 6, an example of coupling between the rough assembly 1 and the base 7 of the machine tool 8 is diagrammatically shown, in which an extension 70 of the base 7 is adapted to be coupled to a cavity 31 of the bracket 3 so as to achieve the centering with respect to the lateral symmetry axis 5. A pair of engagement means (not shown) stabilizes the coupling between the rough assembly 1 and the machine tool 8. The extension 70 is, for example, frustoconical in shape.

In greater detail, once the rough assembly 1 is blocked onto the base 7 as above, by means of a working tool of the machine tool 8, e.g., a common rotating grinding wheel, the rough sector 2 is machined thus obtaining:
- a fixing hole 21, e.g., of 35 mm, for fixing the sector to the hub;
- lateral holes 22, e.g., of 16 mm, for connecting the various sectors to one another to form the friction ring.

Furthermore, the lateral faces 23, the friction faces 24 (front face and rear face), and the slot 25 for the hub are machined.

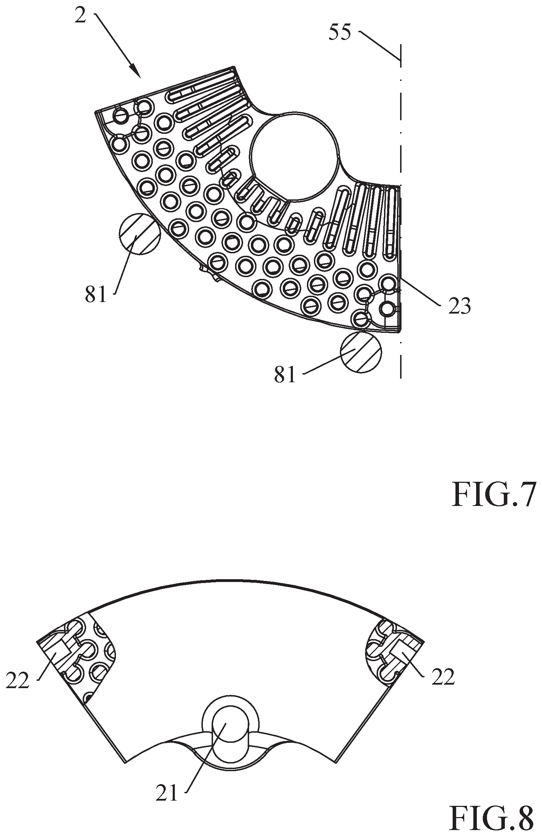

Figure 8 shows a sector after machining on the machine tool, i.e., with the fixing holes 21 and the lateral holes 22.

Proceeding as above, the sectors thus machined fall within a weight lying within a tight tolerance of 25 gm (gram per meter; +/-12.5 with respect to the average value), and in particular laterally balanced so as to eliminate the conventional step of lateral balancing.

Once the sectors have been machined, they are mounted in groups, e.g., of five, on the hub and are positioned on a lathe for a slight flattening of the friction faces 24, carried out to compensate for the slight machining tolerances performed individually on the machine tool 8. Normally, 0.5 mm is here machined per friction face 24.

The brake disc assembly is balanced within the specified tolerances of 25 gm (gram per meter). The measurement is carried out statically or dynamically by means of an appropriate balancing machine. Static balancing is performed by positioning the brake disc assembly vertically on an appropriate stand, on which the brake disc assembly can rotate freely since it rests on the keying hole by means of a ground shaft. The brake disc assembly rotates by gravity, positioning the imbalance point downwards. Once the position is marked, by means of a magnetic mass attached to the outer diameter, and by perturbing the equilibrium, the magnitude of the imbalance is determined, which must be lower than the design specifications, typically 25 gm.

If this is not the case, to bring it within tolerance, some material can be roughly removed from a central column 63 (useful for heat dissipation) appropriately positioned on the axis of each sector of the sector closest to the imbalance.

Advantageously with a single positioning on the machine tool 8, even before the operations of weighing and subsequent machining on groups of sectors, a machined sector is obtained, which is already laterally balanced and also within tolerance as for the final weight.

An operation of machining a rough sector 2 positioned according to the prior art on a machine tool is diagrammatically shown in figure 7. The rough sector 2 rests on two pins 81 so that a lateral face 23 is oriented along a vertical axis 55. In order to machine the opposite faces, it is necessary to flip the rough sector 2 and thus achieve a new positioning.

The forming of bracket 3 in the molten metal casting mould causes a minimal increase in costs compared with the advantage in the quality of the final product because more material is required for each cast rough piece; however, this material is recovered and reused for subsequent manufacturing.

The operations of machining the lateral faces 23 of the rough sector 2 and the slot 25 for the hub are carried out by positioning the rough sector 2 just once.

The bracket 3 allows an optimal centering of the workpiece on the machine tool for the first machining operation, with respect to the rough ventilation surface, the only one which will remain rough at the end of the machining process. This ensures that, whatever the machining process is, the lateral imbalance is minimized and the lateral balancing step is eliminated.

The removal of bracket 3 occurs easily, and the finishing and final balancing ensure obtaining a friction ring within the required tolerances.

The bracket 3 and the connecting elements 4 are removed with a common professional shear, the subsequent machining operations of the sector in the group of sectors finishing the edge of the sector involved in the connection with the bracket 3.

It is apparent that the centering shown of the rough sector 2 according to the lateral symmetry axis 5 is essential.

In the embodiment shown in the figures, said centering occurs by means of the bracket 3, which provides an engagement element for the machine tool 8, which then will not machine the rough sector. The bracket 3 is substantially a service means that is eliminated.

Alternatively it is possible to carry out a conventional moulding of the rough sector 2 without the bracket 3 and use the heat dissipation means 6 of the rough sector 2 for centering according to the lateral symmetry axis 5, as in figure 6.

A central column 63 of said heat dissipation means 6 is adapted to be coupled to a central support 71 of the machine tool 8, wherein the shape of the central support 71 is preferably adapted to promote self-centering in the coupling with the central column 63. For example, if the central column 63 is cylindrical, the central support 71 has a V-shaped upper coupling portion.

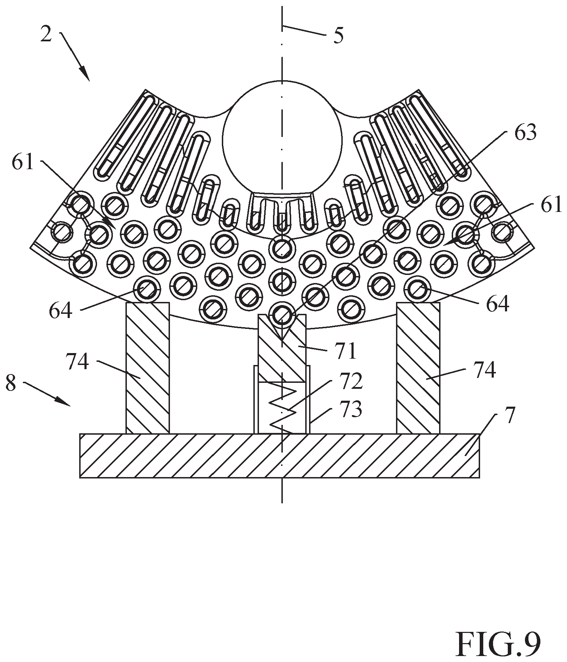

The central support 71 is elastically yielding in the direction of the lateral symmetry axis 5, for example, by means of a spring 72 at the bottom of the central support 71, which slides into a seat 73 integral with the base 7 of the machine tool 8. The sliding of the central support 71 stops when two lateral columns 64 of the heat dissipation means 6 rest on two lateral supports 74 extending from the base 7, as shown in figure 9, where the coupling is stabilized by fixing tie rods (not shown).

The central column 63 is exactly positioned on the lateral symmetry axis 5 of the rough sector 2 and is used as a reference for all subsequent machining operations.

Therefore, the fixing is created using the columns 61 for ventilation, in particular the central column 63 rests on the yielding V-shaped central support 71. When the rough sector 2 rests thereon, it is shifted laterally until it centers itself. The rough sector 2 falls by gravity until the two lateral supports 74, also integral with the base 7 of the machine tool 8, rest on the two lateral columns 64, making the lateral symmetry axis 5 vertical. Finally, the rough sector 2 is fixed to the work surface by means of two tie rods. At this point, all faces to be machined are available.

Therefore, it is generally essential that the coupling between rough sector 2 and base 7 of the machine tool 8 is such as to achieve a centering on the lateral symmetry axis 5, as in figures 6 and 9.

Advantageously, the manufacturing of a specific casting mould with bracket 3 is avoided in the embodiment in figure 9. However, it is necessary to pay attention to the coupling elements of the rough sector 2 and the base 7 of the machine tool 8.

Alternatively, the rough sector, possibly with the bracket, can be obtained by forging, i.e., starting from a hot-forged billet in a mould.

Therefore, rough sector also means a forged sector, the hot moulding that can thus be carried out by casting or forging being essential.

## Claims

1. A method of manufacturing a brake disc assembly for railway vehicles, wherein the brake disc assembly comprises a hub and a friction ring connected to the hub by connecting means, wherein the friction ring is composed of at least two sectors comprising respective friction faces (24),
said method comprising a hot moulding of a rough sector (2), machining of the rough sector (2) by means of a machine tool (8) for the removal of the stock, a grouping of machined sectors on a hub to form a brake disc assembly, a finishing of the brake disc assembly to make the friction faces (24) planar sectors, and a final balancing in which the imbalance of the brake disc assembly is verified so that it is within the design tolerances,
the method being **characterised in that**
the hot moulding also provides making a bracket (3) connected to the rough sector (2) by means of connecting elements (4), thus forming at the exit from the mould a rough assembly (1) composed of the bracket (3) and the rough sector (2),
the machining operations on the machine tool (8) for the removal of the stock take place with single positioning of the rough assembly (1) using the bracket (3) for fixing to a base (7) of the machine tool (8), wherein the machining operations are coaxial with the rough sector (2) according to a lateral symmetry axis (5) of the internal part of the rough sector (2),
said method also providing the removal of the bracket (3) and the connecting elements (4) after the machining operations on the machine tool (8), before the grouping of the machined sectors.

2. Method according to claim 1, **characterized in that** said single positioning occurs by coupling an extension (70) of the base (7) of the machine tool (8) with a cavity (31) of the bracket (3) so as to achieve centering according to the lateral symmetry axis (5), coupling means stabilizing the coupling between the rough assembly (1) and the base (7) of the machine tool (8).

3. Method according to claims 1 or 2, **characterized in that** the machining operations on the machine tool (8) include making a hole (21) for fixing the sector to the hub and lateral holes (22) for joining the various sectors together to form the friction ring, and the removal of stock from the lateral faces (23), from the friction faces (24) and from a hub slot (25).

4. A method of manufacturing a brake disc assembly for railway vehicles, wherein the brake disc assembly comprises a hub and a friction ring connected to the hub by connecting means, wherein the friction ring is composed of at least two sectors comprising respective friction faces (24),
said method comprising hot moulding of a rough sector (2), machining of the rough sector (2) by machine tool (8) for the removal of the stock, grouping of machined sectors on a hub to form a brake disc assembly, finishing of the brake disc assembly to make the friction faces (24) of the rough sectors planar, and final balancing in which the imbalance of the brake disc assembly is verified so that it is within the design tolerances,
the method being **characterised in that**
the machining operations on the machine tool (8) for the removal of the stock take place with a single positioning of the rough sector (2) achieved by coupling heat dissipation means (6) of the rough sector (2) with supports (71, 74) extending from a base (7) of the machine tool (8), said coupling providing a centering on said base (7) according to a lateral symmetry axis (5) of the internal part of the rough sector (2), wherein the machining operations are coaxial with the rough sector (2) according to said lateral symmetry axis(5).
wherein the centering occurs by coupling a central column (63) of said heat dissipation means (6) with a central support (71) elastically yielding in the direction of the lateral symmetry axis (5) sliding in a seat (73) integral with the base (7), the sliding of the central support (71) interrupting when two lateral columns (64) of said heat dissipation means (6) rest on two lateral supports (74) extending from the base (7).

5. Method according to claim 4, **characterized in that** the central column (63) is cylindrical and an upper coupling portion of the central support (71) is V-shaped.

6. Method according to any of the preceding claims, **characterized in that** the hot moulding occurs by casting of molten metal or by forging.
